# EUROPÄISCHE PATENTSCHRIFT

(11) **EP 0 505 832 B1**
(45) Veröffentlichungstag und Bekanntmachung des Hinweises auf die Patenterteilung: **07.06.1995**
(21) Anmeldenummer: 92104136.4
(22) Anmeldetag: 11.03.1992
(51) Int. Cl.: B01J 35/06, B01J 37/02, B01D 53/94

(54) **Filter- oder Katalysatorkörper**
Filter or catalyst body
Corps filtrant ou catalytique

(30) Priorität: 28.03.1991 DE 4110285
(43) Veröffentlichungstag der Anmeldung: 30.09.1992
(73) Patentinhaber: Schwäbische Hüttenwerke Gesellschaft mit beschränkter Haftung, D-73414 Aalen (DE)
(72) Erfinder: Härle, Hans A., W-7085 Bopfingen (DE)
(74) Vertreter: Lorenz, Werner, Dipl.-Ing.

(56) Entgegenhaltungen:
- EP-A- 0 288 746
- EP-A- 0 387 394
- WO-A-83/01017
- DE-A- 2 626 597
- GB-A- 2 026 336

## Beschreibung

Die Erfindung betrifft einen Filter- oder Katalysatorkörper zur Beseitigung von schädlichen Bestandteilen aus den Abgasen eines Verbrennungsmotores, insbesondere eines Dieselmotores, mit wenigstens einer Gewebelage aus Metalldrähten oder Metallfasern, wobei in die Maschen sinterfähiges Material in Pulver-, Körner-, Faserbruchstück- oder Spanform eingebracht und auf die Drähte bzw. Fasern aufgesintert ist.

Ein Filter- oder Katalysatorkörper dieser Art ist z.B. in der DE-A- 39 08 581 oder EP-A- 387 394 beschrieben.

Als Basismaterial wird dabei ein mehrlagiges Gewebe oder Gestrick verwendet, wobei Drähte bzw. Fasern in mehreren Ebenen flach übereinander gelegt sind.

Ein hauptsächliches Einsatzgebiet eines derartigen Körpers sind Verbrennungsmotore bei Kraftfahrzeugen, wobei aus dem Abgasstrom umwelt- und/oder gesundheitsschädliche Bestandteile, wie z.B. Ruß, Kohlenmonoxyd, Kohlenwasserstoffe und Stickoxyde, entfernt werden sollen.

Ein wirtschaftlicher und praktikabler Einsatz derartiger Filter- oder Katalysatorkörper war jedoch aufgrund der auf diesem Gebiete herrschenden Problematik bisher nicht möglich.

Nachteilig dabei ist z.B. nämlich, daß Filter- oder Katalysatorkörper in sich relativ inhomogen sind, was insbesondere für ein unregelmäßig gebildetes Gestrick oder Gewirk gilt. Ebenso ist die Wärmeeinleitung in den Körper und die Wärmeleitfähigkeit in ihm selbst beschränkt. So läßt sich die Wärme nicht immer gleichmäßig abführen, und es besteht die Gefahr von örtlichen Überhitzungen, wodurch keine gleichmäßige Rußverbrennung gewährleistet ist. Ein weiteres Problem liegt auch bei den bekannten Filterkörpern darin, daß deren mechanische Stabilität begrenzt ist. Dies würde bei einem Einsatz im Abgasstrom eines Verbrennungsmotores aufgrund der dabei auftretenden rauhen Belastung, insbesondere hoher Temperaturen und Druckpulsationen, zu Problemen führen, weshalb Filter- oder Katalysatorkörper der vorbeschriebenen Art für dieses Anmeldungsgebiet noch nicht wirtschaftlich einsetzbar waren.

Der vorliegenden Erfindung liegt daher die Aufgabe zugrunde, einen Filter- oder Katalysatorkörper der eingangs erwähnten Art derart zu verbessern, daß er für die Beseitigung von schädlichen Bestandteilen aus den Abgasen eines Verbrennungsmotores besser geeignet ist, insbesondere eine bessere Wärmeverteilung und Wärmeleitfähigkeit besitzt.

Erfindungsgemäß wird diese Aufgabe dadurch gelöst, daß das Gewebe als Köperdrahtwebe ausgebildet ist, in dessen Maschen sinterfähiges Material eingebracht und mit den Drähten bzw. Fasern versintert ist.

In überraschender Weise hat sich gezeigt, daß ein Köperdrahtgewebe für das vorgesehene Einsatzgebiet besonders geeignet ist. Bei einer Köperbindung berühren sich die Ketthebungen im Schußkörper bzw. die Kettsenkungen im Kettkörper im Bindungsrapport nur in einer Diagonale. Die Drähte bzw. Fasern des Köperdrahtgewebes sind sehr gleichmäßig in dem Gewebe angeordnet und die Maschen sind sehr gleichmäßig und relativ groß. Dies bedeutet, daß man in die einzelnen Maschen problemlos das Sintermaterial einbringen kann und dann nach dem Versintern ein weitgehend homogenes Gewebe erhält, wodurch eine bessere Wärmeeinleitung in das Gewebe und eine gleichmäßigere Wärmeleitfähigkeit und Wärmeverteilung in dem Gewebe erreicht wird. Dies ist insbesondere für den vorgesehenen Einsatzfall im Abgasstrom eines Verbrennungsmotores von Vorteil, wobei hohe Temperaturunterschiede bzw. hohe Temperaturschwankungen auftreten. So soll insbesondere im Kaltstartbetrieb eine möglichst schnelle und gleichmäßige Erwärmung des Gewebes erfolgen, damit dieses als Filter- oder Katalysatorkörper möglichst schnell wirksam wird. Gleichzeitig sollen Überhitzungen im Vollastbetrieb vermieden werden. Dies bedeutet, es muß für eine schnelle und gleichmäßige Wärmeverteilung bzw. -abfuhr gesorgt werden. Dies wird durch das erfindungsgemäße Gewebe in überraschender Weise sehr gut erreicht.

Ein weiterer Vorteil des Köperdrahtgewebes liegt in dessen Leichtgewichtigkeit und der Möglichkeit, dickere Drähte bei kleineren Maschenweiten zu verwenden.

Durch den Sintervorgang, wobei das eingebrachte Sintermaterial und die Drähte an den Berührungs- bzw. Kreuzungspunkten miteinander verbunden werden, ergibt sich im Vergleich zu einem normalen Gewebe eine deutlich bessere Wärmeverteilung über die Berührungspunkte im Inneren des Gewebes. Gleichzeitig wird dadurch auch dessen Stabilität deutlich besser.

Durch das Köperdrahtgewebe wird darüberhinaus auch ein räumlicher Aufbau geschaffen, in den sich das Sintermaterial besser implantieren läßt. Gleichzeitig wird das Gewebe dadurch auch steifer und behält auch bei hohen Temperaturen seine Steifigkeit.

Nach dem Sintervorgang kann der Filter- bzw. Katalysatorkörper problemlos in die gewünschte Endform gebracht werden, die sich nach den Einbau- und Platzverhältnissen richtet.

In der Praxis hat sich gezeigt, daß als Ausgangsmaterial ein 4-Schaft- oder 5-Schaft-Köperdrahtgewebe am besten geeignet ist. Dies gilt insbesondere für ein 5-Schaft-Köperdrahtgewebe, wobei nur jeder fünfte Draht in Kette und Schuß eingebunden ist. In der Regel wird ein derartiges Drahtgewebe als Langmaschengewebe gewoben, wobei man in vorteilhafter Weise für den vorgesehenen Anwendungsfall die Drahtstärke in Kett- und Schußrichtung mit gleichen Durchmessern wählt.

In der Praxis hat sich gezeigt, daß ein Verhältnis von Maschenweite zu Drahtdurchmesser in einer Größenordnung von ca. 1:1 sehr gut geeignet ist. Mit einem derartigen Gewebe wird eine hohe Gleichmäßigkeit bezüglich Temperaturverteilung und Wärmeableitung bei einer gleichzeitig sehr schnellen Erwärmung für den Kaltstartbetrieb erreicht.

Als am besten geeignete Maschenweiten bzw. Durchmesser haben sich Werte im Bereich von 0,15 - 0,30 mm, vorzugsweise 0,20 mm gezeigt.

Eine sehr vorteilhafte Weiterbildung der Erfindung besteht darin, daß die Drähte bzw. Fasern des Gewebes derart leicht gekrümmt verlaufen, daß die Gewebestärke ca. das 2,5fache des Durchmessers der Drähte bzw. der Fasern des Gewebes besitzt.

Durch diese Ausgestaltung wird ein noch besserer räumlicher Aufbau für eine Lage erreicht, und es läßt sich noch mehr Sintermaterial einbringen.

Als Material für die Drähte hat sich Stahldraht mit ca. 20% Nickel- und 25% Chromanteil als sehr gut geeignet herausgestellt.

In einer vorteilhaften Weiterbildung der Erfindung können die Drähte bzw. Fasern des Gewebes noch mit katalytisch wirkendem Beschichtungsmaterial versehen werden. So kann man z.B. eingangsseitig auf dem Gewebe bzw. dessen Drähte bzw. Fasern ein katalytisches Material aufbringen, mit dem bei Verwendung des Gewebes als Rußfilter die Zündtemperatur zur Rußverbrennung reduziert wird. Als katalytisches Material hierfür läßt sich z.B. Eisen, Mangan, Molybdän, Vanadiumpentoxyd u.ä. verwenden.

Möchte man noch weitere schädliche Bestandteile aus dem Abgas entfernen, wie z.B. Kohlenmonoxyd, Stickoxyde oder Kohlenwasserstoff, so kann man in vorteilhafter Weise das Gewebe ausgangsseitig mit einem entsprechenden Katalysator versehen, wie z.B. Rhodium, Platin, Paladium oder dergleichen.

Der Filter- oder Katalysatorkörper kann erfindungsgemäß ein- oder mehrlagig ausgebildet sein. Bei einer mehrlagigen Ausbildung wird man im allgemeinen mehrere Gewebe, in deren Maschen jeweils Sintermaterial eingebracht worden ist, in einem gemeinsamen Sintervorgang miteinander verbinden.

Eine weitere vorteilhafte und nicht naheliegende Weiterbildung der Erfindung kann darin bestehen, daß das Gewebe mit einer glatten Oberfläche auf einer Seite und einer rauhen Oberfläche auf der anderen Seite ausgebildet ist.

In einer vorteilhaften Anordnung kann man dabei das Gewebe so anordnen, daß die rauhe Oberfläche eingangsseitig angeordnet ist. Auf diese Weise ergibt sich eine große Oberfläche zum Abscheiden bzw. Umwandeln der schädlichen Bestandteile, z.B. von Ruß, während durch die glatte Ausgangsseite ein geringer Gegendruck erzeugt wird. Auf diese Weise lassen sich die Leistungsverluste des Verbrennungsmotores geringer halten.

Ein weiterer Vorteil der Ausgestaltung mit einer glatten und einer rauhen Oberfläche besteht auch darin, daß man diese gegebenenfalls auf verschiedene Weise bei einer mehrlagigen Ausgestaltung des Filter- oder Katalysatorkörpers durch eine entsprechende Zusammenstellung der einzelnen Lagen mit glatten und rauhen Eingangs- und Ausgangsseiten hinsichtlich des Druckverlustes bzw. Druckabbaues und seiner Filter- oder Katalysatoreigenschaften steuern kann.

So läßt sich z.B. durch die Verwendung eines Gewebes mit einer rauhen Außenseite ein Vorfilter schaffen.

Bei einem Verfahren zur Herstellung des erfindungsgemäßen Filter- oder Katalysatorkörpers kann vorgesehen sein, daß in ein Köperdrahtgewebe über ein Bindemittel in dessen Maschen das sinterfähige Material eingebracht wird, wonach die Drähte bzw. die Fasern und das Material miteinander versintert werden.

Um das sinterfähige Material möglichst gleichmäßig verteilt in die Maschen einzubringen, verwendet man in einer vorteilhaften Verfahrensweise der Erfindung ein Bindemittel. Das Bindemittel kann als Spachtelmasse wirken, in dem das sinterfähige Material möglichst gleichmäßig verteilt ist. Das Bindemittel kann dann mit dem darin verteilten Material in die Maschen des Gewebes eingestrichen, eingewalzt oder im Tauchverfahren gleichmäßig aufgebracht werden. Zur Erhöhung der Wärmeübertragung kann das sinterfähige Material auch auf die Oberseiten und die Unterseiten der Drähte bzw. der Fasern aufgebracht werden.

Dabei ist lediglich darauf zu achten, daß ein Bindemittel verwendet wird, das beim nachfolgenden Versintern rückstandsfrei verdampft bzw. verdunstet.

Statt einem Gewebe mit Köperbindung, kann ggf. auch ein Gewebe mit einer Atlasbindung verwendet werden, wobei vor dem Sintervorgang noch weniger Berührungspunkte vorhanden sind. Eine Atlasbindung ist als Sonderform von einer Köperbindung abgeleitet.

Nachfolgend ist ein Ausführungsbeispiel der Erfindung anhand der Zeichnung prinzipmäßig beschrieben.

Es zeigt:
- Fig. 1:: eine Draufsicht auf das erfindungsgemäße Gewebe,
- Fig. 2:: einen Querschnitt durch das Gewebe nach Anspruch 1,
- Fig. 3:: einen Längsschnitt durch das Gewebe nach der Fig. 1.

Das Gewebe ist ein 5-Schaft-Köperdrahtgewebe 1 und besteht aus einer Vielzahl von Kettdrähten 2 und Schußdrähten 3. Wie ersichtlich ist jeder fünfte Draht in Kette und Schuß eingebunden. Wie weiter ersichtlich, beträgt die Maschenweite wenigstens annähernd dem Durchmesser jedes Drahtes. Statt Drähte können auch - je nach deren Dicke und Definitionsart - Fasern verwendet werden.

Als Material für die Drähte kann Stahl mit 20% Nickel- und 25% Chromanteil, Rest Eisen und Spuren von Mangan und Molybdän verwendet werden, wie es z.B. als Werkstoff 1.4841 bekannt ist.

In das Gewebe 1 wird hochtemperaturbeständiges Sintermaterial 4 in Pulver- oder Körnerform eingebracht, das in einem Bindemittel verteilt ist. Diese Masse wird z.B. mit einer Spachtel in die Maschen 5 des Gewebes 1 eingestrichen. Als Sintermaterial können Metalle, keramische Stoffe, Kunststoffe oder Mischungen daraus verwendet werden. Im allgemeinen wird man jedoch bevorzugt Stahl- und Stahllegierungen als Sintermaterial verwenden. Um katalytische Eigenschaften zu erzeugen, wird man dabei Materialien verwenden oder hinzufügen, z.B. Stahllegierungen, die katalytische Eigenschaften besitzen, wie z.B. Platin, Rhodium, Vanadium oder dergleichen. Das Sintermaterial kann statt nur zwischen die Maschen 5 selbstverständlich auch auf die Ober- und Unterseiten der Drähte 2 und 3 aufgebracht werden.

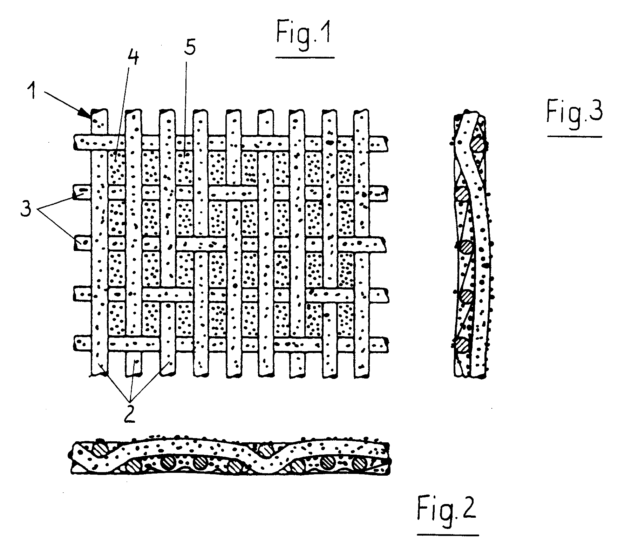

Aus den Fig. 2 und 3 ist ersichtlich, daß die Drähte 2 und 3 leicht gekrümmt werden, so daß sich eine Dicke des Gewebes 1 ergibt, die über dem doppelten Durchmesser der übereinander liegenden Kett- und Schußdrähte liegt. In der Zeichnung ist dabei die Krümmung nur geringfügig dargestellt, in der Praxis kann sie einen halben Kreisdurchmesser betragen, womit man auf eine Gesamtdicke des Gewebes 1 von 2,5 kommt.

Das Gewebe 1 ist so ausgebildet, daß die Webart auf einer Seite eine glatte und auf der anderen Seite eine rauhe Oberfläche besitzt.

## Patentansprüche

1. Filter- oder Katalysatorkörper zur Beseitigung von schädlichen Bestandteilen aus den Abgasen eines Verbrennungsmotores, insbesondere eines Dieselmotores, mit wenigstens einer Gewebelage aus Metalldrähten oder Metallfasern, wobei in die Maschen sinterfähiges Material in Pulver-, Körner-, Faserbruchstück- oder Spanform eingebracht und auf die Drähte bzw. Fasern aufgesintert ist,
**dadurch gekennzeichnet,** daß das Gewebe als Köperdrahtgewebe (1) ausgebildet ist, in dessen Maschen (5) sinterfähiges Material (4) eingebracht und mit den Drähten bzw. Fasern (2,3) versintert ist.

2. Filter- oder Katalysatorkörper nach Anspruch 1,
**dadurch gekennzeichnet,** daß das Drahtgewebe ein 4- oder 5-Schaft-Köperdrahtgewebe ist.

3. Filter- oder Katalysatorkörper nach Anspruch 1 oder 2,
**dadurch gekennzeichnet,** daß das Sintermaterial aus Keramik, Kunststoff, Metall, insbesondere aus Stahl oder einer Stahllegierung oder Mischungen daraus besteht.

4. Filter- oder Katalysatorkörper nach Anspruch 1, 2 oder 3,
**dadurch gekennzeichnet,** daß die Drähte bzw. Fasern (2,3) in Kett- und Schußrichtung gleiche Durchmesser aufweisen.

5. Filter- oder Katalysatorkörper nach Anspruch 1, 2, 3 oder 4,
**dadurch gekennzeichnet,** daß das Verhältnis zwischen Maschenweite und Drahtdurchmesser wenigstens annähernd 1:1 beträgt.

6. Filter- oder Katalysatorkörper nach Anspruch 5,
**dadurch gekennzeichnet,** daß die Maschenweite bzw. der Drahtdurchmesser zwischen 0,15 und 0,30 mm, vorzugsweise 0,20 mm beträgt.

7. Filter- oder Katalysatorkörper nach einem der Ansprüche 1 bis 6,
**dadurch gekennzeichnet,** daß die Drähte bzw. Fasern (2,3) des Gewebes (1) derart leicht gekrümmt verlaufen, daß die Gewebestärke ca. das 2,5fache des Durchmessers der Drähte bzw. der Fasern (2,3) des Gewebes besitzt.

8. Filter- oder Katalysatorkörper nach einem der Ansprüche 1 bis 7,
**dadurch gekennzeichnet,** daß als Drähte (2,3) für das Gewebe (1) Stahldrähte mit ca. 20 % Nickel- und 25 % Chromanteil vorgesehen sind.

9. Filter- oder Katalysatorkörper nach einem der Ansprüche 1 bis 8,
**dadurch gekennzeichnet,** daß das Gewebe (1) mit einer glatten Oberfläche auf einer Seite und einer rauhen Oberfläche auf der anderen Seite ausgebildet ist.

10. Filter- oder Katalysatorkörper nach einem der Ansprüche 1 bis 9,
**dadurch gekennzeichnet,** daß mehrere Lagen von Gewebe (1) zu einem Körper miteinander verbunden sind.

11. Filter- oder Katalysatorkörper nach Anspruch 9 und 10,
**dadurch gekennzeichnet,** daß eine erste Lage mit einer rauhen Oberfläche als Außenseite als Vorfilter vorgesehen ist.

12. Filter- oder Katalysatorkörper nach einem der Ansprüche 1 bis 11,
**dadurch gekennzeichnet,** daß das Gewebe (1) eingangsseitig mit die Zündtemperatur von zu verbrennenden Produkten, insbesondere von Ruß, senkenden Katalysatoren beschichtet ist.

13. Filter- oder Katalysatorkörper nach einem der Ansprüche 1 bis 12,
**dadurch gekennzeichnet,** daß das Gewebe (1) ausgangsseitig mit einer katalytischen Beschichtung zur Beseitigung von Kohlenmonoxyd, Kohlendioxyd, schädlichen Kohlenwasserstoffen, Stickoxyd und dergleichen versehen ist.

14. Verfahren zum Herstellen eines Filter- oder Katalysatorkörpers zur Beseitigung von schädlichen Bestandteilen aus den Abgasen eines Verbrennungsmotores, insbesondere eines Dieselmotores, wobei in wenigstens eine Gewebelage aus Metalldrähten oder Metallfasern in die Maschen sinterfähiges Material in Pulver-, Körner-, Faserbruchstück- oder Spanform eingebracht und anschließend zusammen mit den Drähten bzw. Fasern versintert wird, nach einem der Ansprüche 1 bis 13,
**dadurch gekennzeichnet,** daß in ein als Köperdrahtgewebe ausgebildetes Gewebe über ein Bindemittel in dessen Maschen (5) das sinterfähige Material (4) eingebracht wird, wonach die Drähte bzw. Fasern (2,3) und das Material (4) miteinander versintert werden.

## Claims

1. Filter or catalyst body for removing harmful constituents from the exhaust gases of an internal combustion engine, in particular a diesel engine, comprising at least one fabric layer consisting of metal wires or metal fibres, sintering material in the form of powder, granules, fibre fragments or chips being introduced into the meshes and being sintered on to the wires or fibres, characterised in that the woven fabric is a twilled wire fabric (1), sintering material (4) being introduced into the meshes (5) thereof and being sintered with the wires or fibres (2, 3).

2. Filter or catalyst body according to claim 1, characterised in that the wire fabric is a 4-shaft or 5-shaft twilled wire fabric.

3. Filter or catalyst body according to claim 1 or claim 2, characterised in that the sintering material consists of ceramics, plastics, metal, in particular steel or a steel alloy or mixtures thereof.

4. Filter or catalyst body according to claim 1, 2 or 3, characterised in that the wires or fibres (2, 3) have the same diameter in the warp and weft directions.

5. Filter or catalyst body according to claim 1, 2, 3 or 4, characterised in that the ratio between the mesh width and the wire diameter is at least approximately 1:1.

6. Filter or catalyst body according to claim 5, characterised in that the mesh width or the wire diameter is between 0.15 and 0.30 mm, preferably 0.20 mm.

7. Filter or catalyst body according to one of claims 1 to 6, characterised in that the wires or fibres (2, 3) of the woven fabric (1) are slightly curved in such a manner that the thickness of the woven fabric is approximately 2.5 times the diameter of the wires or fibres (2, 3) of the woven fabric.

8. Filter or catalyst body according to one of claims 1 to 7, characterised in that steel wires containing approximately 20 % of nickel and 25 % of chromium are provided as the wires (2, 3) for the woven fabric (1).

9. Filter or catalyst body according to one of claims 1 to 8, characterised in that the woven fabric (1) has a smooth surface on one side and a rough surface on the other side.

10. Filter or catalyst body according to one of claims 1 to 9, characterised in that several layers of woven fabric (1) are joined together to form one body.

11. Filter or catalyst body according to claims 9 and 10, characterised in that a first layer having a rough surface as its outer face is provided as a preliminary filter.

12. Filter or catalyst body according to one of claims 1 to 11, characterised in that the woven fabric (1) is coated at the feed end with catalysts lowering the ignition temperature of products to be burned, in particular soot.

13. Filter or catalyst body according to one of claims 1 to 12, characterised in that the woven fabric (1) is provided at the delivery end with a catalytic coating for removing carbon monoxide, carbon dioxide, harmful hydrocarbons, nitrogen oxide and the like.

14. Process for the manufacture of a filter or catalyst body for removing harmful constituents from the exhaust gases of an internal combustion engine, in particular a diesel engine, sintering material in the form of powder, granules, fibre fragments or chips being introduced into the meshes of at least one fabric layer consisting of metal wires or metal fibres and then being sintered together with the wires or fibres, according to one of claims 1 to 13, characterised in that the sintering material (4) is introduced via a binder into the meshes (5) of a woven fabric in the form of a twilled wire fabric, after which the wires or fibres (2, 3) and the material (4) are sintered together.

## Revendications

1. Corps filtrant ou catalytique pour éliminer des composants nocifs des gaz d'échappement d'un moteur à combustion, notamment d'un moteur Diesel, comportant au moins une couche de tissu en fils métalliques ou en fibres métalliques, où du matériel apte au frittage est appliqué dans les mailles sous forme de poudre, de grains, de fragments de fibres ou de copeaux et est fritté sur les fils ou fibres, **caractérisé** en ce que le tissu est formé par un tissu métallique sergé (1), dans les mailles (5) duquel du matériel apte au frittage (4) est appliqué et fritté avec les fils ou fibres métalliques (2, 3).

2. Corps filtrant ou catalytique selon la revendication 1, **caractérisé** en ce que le tissu est un tissu métallique sergé à 4 ou 5 tiges.

3. Corps filtrant ou catalytique selon la revendication 1 ou 2, **caractérisé** en ce que le matériel à fritter se compose de céramique, de matière synthétique, de métal, notamment d'acier ou d'un alliage d'acier, ou de mélanges de ces matières.

4. Corps filtrant ou catalytique selon la revendication 1, 2 ou 3, **caractérisé** en ce que les fils ou fibres (2, 3) présentent le même diamètre dans la chaîne et dans la trame.

5. Corps filtrant ou catalytique selon la revendication 1, 2, 3 ou 4, **caractérisé** en ce que le rapport entre la taille des mailles et le diamètre des fils vaut au moins approximativement 1:1.

6. Corps filtrant ou catalytique selon la revendication 5, **caractérisé** en ce que la taille des mailles ou le diamètre des fils se situe entre 0,15 et 0,30 mm, et de préférence à 0,20 mm.

7. Corps filtrant ou catalytique selon l'une des revendications 1 à 6, **caractérisé** en ce que les fils ou fibres (2, 3) du tissu (1) ont un tracé légèrement incurvé, de sorte que l'épaisseur du tissu représente environ 2,5 fois le diamètre des fils ou fibres (2, 3).

8. Corps filtrant ou catalytique selon l'une des revendications 1 à 7, **caractérisé** en ce que les fils (2, 3) du tissu (1) sont des fils d'acier contenant environ 20% de nickel et 25% de chrome.

9. Corps filtrant ou catalytique selon l'une des revendications 1 à 8, **caractérisé** en ce que le tissu (1) présente une surface lisse d'un côté et une surface rugueuse de l'autre côté.

10. Corps filtrant ou catalytique selon l'une des revendications 1 à 9, **caractérisé** en ce que plusieurs couches de tissu (1) sont liées les unes aux autres en un corps.

11. Corps filtrant ou catalytique selon les revendications 9 et 10, **caractérisé** en ce qu'une première couche à surface rugueuse est prévue comme face extérieure formant un préfiltre.

12. Corps filtrant ou catalytique selon l'une des revendications 1 à 11, **caractérisé** en ce que, du côté de l'entrée, le tissu (1) est revêtu de catalyseurs abaissant la température d'ignition de produits à brûler, notamment la suie.

13. Corps filtrant ou catalytique selon l'une des revendications 1 à 12, **caractérisé** en ce que, du côté de la sortie, le tissu (1) est pourvu d'un revêtement catalytique pour l'élimination du monoxyde de carbone, du dioxyde de carbone, d'hydrocarbures nocifs, d'oxyde d'azote et de substances analogues.

14. Procédé de fabrication d'un corps filtrant ou catalytique pour éliminer des composants nocifs des gaz d'échappement d'un moteur à combustion, notamment d'un moteur Diesel, dans lequel, dans au moins une couche de tissu en fils métalliques ou en fibres métalliques, du matériel apte au frittage est appliqué dans les mailles sous forme de poudre, de grains, de fragments de fibres ou de copeaux et est fritté sur les fils ou fibres, selon l'une des revendications 1 à 13, **caractérisé** en ce que le matériel apte au frittage (4) est appliqué à l'aide d'un liant dans les mailles (5) du tissu, constitué par un tissu métallique sergé, après quoi les fils ou fibres (2, 3) et ledit matériel (4) sont frittés ensemble.
